# EUROPEAN PATENT APPLICATION

(11) **EP 3 967 925 A1**
(43) Date of publication of application: **16.03.2022**
(21) Application number: 20020407.1
(22) Date of filing: 09.09.2020
(51) Int. Cl.: F23D 14/22, F23D 14/32, F23L 7/00, F23N 1/02

(54) **BURNER AND METHOD FOR OPERATING A BURNER**

(71) Applicant: Linde GmbH, 82049 Pullach (DE)
(72) Inventor: Gripenberg, Henrik, 18350 Täby (SE); Rangmark, Lennart, 125 55 Älvsjö (SE); Ekman, Tomas, 13937 Saltsjö-Boo (SE); Lodin, Johannes, 117 26 Stockholm (SE); Richardson, Andrew Peter, Clinton, NJ 08809 (US)
(74) Representative: Lu, Jing

(57) **Abstract**

The present invention relates to a burner (100) for combustion of fluids comprising an inner fluid supply unit (110) and an outer fluid supply unit (120), wherein the inner fluid supply unit (110) comprises a first inner fluid ejection element (111), particularly a first pipe, and a second inner fluid ejection element (112), particularly a second pipe, encompassing at least an axial portion of the first inner fluid ejection element (111), and wherein the outer fluid supply unit (120) comprises at least one outer fluid ejection element (121), particularly at least one pipe, wherein the at least one outer fluid ejection element (121) is arranged at a specific radial distance from the inner fluid supply unit (110), particularly from a centre of the inner fluid supply unit (110), particularly from a centre of the first inner fluid ejection element (111).

## Description

The present invention relates to a burner for combustion of fluids as well as to a method for operating a burner.

### Prior art

A wide range of burner technologies exists, which can be used in high temperature heating and melting processes such as aluminium melting or remelting furnaces, steel reheating furnaces and glass melting furnaces. By means of these burners, combustion of fluids is performed, particularly of a fuel like natural gas, methane, propane, etc., and an oxidant. For example, air can be used as oxidant, in so called air-fuel burners. Further, pure oxygen can be used as oxidant, in so called oxy-fuel burners. It is also possible to use a combination of air and oxygen as oxidant, in so called air-oxy-fuel burners.

Oxy-fuel burners can perform flameless or semi flameless combustion of the fuel with high purity oxygen. In so called low temperature oxy-fuel burners (LTOF) the combustion can occur under a diluted oxygen concentration by mixing furnace gases into the combustion zone. So called low emission air-oxy-fuel burners (LEAF) can be used for combustion with air, oxygen enriched air and pure oxygen.

The addition of pure oxygen to the combustion process, i.e. in air-oxy-fuel burners or oxy-fuel burners, can offer advantages resulting from the reduction in the volume of the products of combustion and waste heat and the increase in flame temperature and heat transfer and consequent production rates and process efficiency. However, the addition of pure oxygen to the combustion process also comes with some challenges in the control of NOx emissions. Reducing NOx emissions is an important issue for most users of burners.

### Disclosure of the invention

The present invention relates to a burner for combustion of fluids as well as a method for operating a burner with the features of the independent claims. Preferred embodiments and advantages of a method and a furnace according to the invention are subject of the dependent claims and of the following description.

The burner comprises an inner or central fluid supply unit and an outer or peripheral fluid supply unit. These inner and outer fluid supply units provide a specific supply system for different fluids to be combusted. Particularly, the burner is provided for combustion of a fuel, particularly natural gas or methane, and at least one oxidant, particularly air and/or oxygen.

The inner fluid supply unit comprises a first inner fluid ejection element, particularly a first pipe, particularly for ejecting a first fluid, and a second inner fluid ejection element, particularly a second pipe, particularly for ejecting a second fluid. The second inner fluid ejection element encompasses, i.e. circumferentially surrounds at least an axial portion of the first inner fluid ejection element. Particularly, the first and the second inner fluid ejection elements are arranged coaxially and further particularly concentrically.

The outer fluid supply unit comprises at least one outer fluid ejection element, particularly at least one pipe, particularly for ejecting the first fluid and/or the second fluid and/or a third fluid. The at least one outer fluid ejection element is arranged at a specific radial distance from the inner fluid supply unit, particularly from a centre of the inner fluid supply unit, particularly from a centre of the first inner fluid ejection element. The term "radial distance from the inner fluid supply unit" is particularly to be understood as the radial distance between the centre of the inner fluid supply unit, particularly the centre of the first inner fluid ejection element, and the centre of the corresponding outer fluid ejection element, particularly at an axial end of the corresponding outer fluid ejection element and/or at an axial end of the inner fluid supply unit. For example, the specific radial distance can be up to twice the radius of the outermost inner fluid ejection element of the inner fluid supply unit, especially at most 50% larger, further especially at most 25% larger than the radius of the outermost inner fluid ejection element.

These one or several outer fluid ejection elements are thus particularly arranged at specific radial positions around the inner fluid supply unit, further particularly peripherally around the inner or central fluid supply unit. The outer fluid ejection elements are especially arranged adjacent to the inner fluid supply unit, i.e. adjacent to the inner fluid ejection elements. Particularly, the at least one outer fluid ejection element is arranged at a side or portion of a wall of the second inner fluid ejection element facing away from or opposite of a wall of the first inner fluid ejection element.

Particularly, a longitudinal axis of the at least one outer fluid ejection element is parallel or at least essentially parallel to a longitudinal axis of the first and the second inner fluid ejection element. The various fluid ejection elements are thus particularly parallel to each other. It is also possible that the longitudinal axis of the at least one outer fluid ejection element and the longitudinal axis of the first and the second inner fluid ejection element are arranged with a specific angle or inclination angle relative to each other. For example, this angle can be in a range between 0° and 25°, especially in the range between 0° and 10°, further especially in the range between 0° and 5°.

Each of the fluid ejection elements is particularly provided for ejecting a specific fluid. Particularly, each fluid ejection element is configured to be connected with a fluid supply, e.g. comprising a fluid storing vessel and a pump, such that a corresponding fluid is transported from said fluid supply through the corresponding fluid ejection element and ejected throughout an axial end of the corresponding fluid ejection element. Each of the fluid ejection elements can be connected with an individual fluid supply. Individual fluid ejection elements can also be connected with the same fluid supply. Fluids can be ejected by the inner and outer ejection elements in directions parallel or at least essentially parallel to each other.

Particularly, the second inner fluid ejection element encompasses at least an axial portion extending from an axial end of the of the first inner fluid ejection element, at which axial end the corresponding fluid can be ejected from the first inner fluid ejection element. It is, however, also possible that the second inner fluid ejection element surrounds the entire first fluid ejection element.

The first and second inner fluid ejection elements are particularly arranged such that an annular channel is provided or formed around the first inner fluid ejection element. For this purpose, there is particularly a specific distance between an outer wall of the first inner fluid ejection element and an inner wall of the second inner fluid ejection element. The corresponding fluid can be led through this annular channel.

By means of the first inner fluid ejection element, a first jet or stream of a first fluid can be created. By means of the second fluid ejection element an annular jet or stream of a second fluid can be created circumferentially encompassing or surrounding the first jet. Particularly, these two streams can interact or mix such that a central, inner jet or stream of a mixture of the first and second fluids can be created.

By means of the outer fluid ejection elements additional outer fluid jets can be created, each at a peripheral position around the central jets. The specific distance, at which the outer fluid ejection elements are arranged form the inner fluid supply unit, can especially be determined such that a specific interaction between the inner jets and the outer jets can be achieved.

The present invention therefore provides a burner, wherein different fluids, particularly fuel and different oxidants, can flexibly be provided in different ways. For this purpose, the different fluid ejection elements can flexibly be connected with individual fluid supplies such that each fluid ejection elements can individually provide a specific fluid. It can flexibly be interchanged which fluid is provided by which fluid ejection element and individual fluid ejection elements can also be deactivated such that they do not eject fluid. Particularly, the present burner provides a combination of an air-fuel, an oxy-fuel as well as an air-oxy-fuel burner. Depending on which function the burner is supposed to perform, specific fluids can be provided by the different fluid ejection elements. The desired combination of the above mentioned operating modes can be altered continuously during the production cycle.

The wide spectra of process combinations of the present burner gives maximised flexibility for customers or users. The present burner can combine traditional air-fuel firing with low NOx oxy-fuel technologies to provide a maximised melting capacity, improved temperature distribution and minimised energy consumption for the total process. When using burners in industrial applications like furnaces, it is usually not easily possible to change the configuration of the burner and the furnace. For example, when converting a furnace from using air as oxidant to the use of oxygen it implies a considerable change of hardware in terms of burner and supply system replacement. This is a cost intensive and elaborate process. However, the present burner allows easily switching between different burner and furnace operations. Depending on the specific process to be performed in the furnace, the burner can individually be operated in order to achieve optimised results.

Further, common air-oxy-fuel burners are usually specifically designed to provide a specific combination of air and oxygen as oxidant. These kinds of common air-oxy-fuel burners can usually not be operated in a pure air-fuel or a pure oxy-fuel mode. The present burner, however, allows flexibly switching between these different operating modes.

Moreover, dynamics and characteristics of the combustion can flexibly be amended and controlled depending on which specific fluid is provided by which specific fluid ejection element. For example, providing fuel by means of the first fluid ejection element as a high velocity fuel jet and providing an oxidant, e.g. air, by means of the second fluid ejection element as an annular jet surrounding the fuel jet can achieve individual and different flame and combustion characteristics compared to e.g. providing an oxidant by means of the first fluid ejection element and fuel by means of the second fluid ejection element. Further, by providing additional fuel and/or oxidant jets by means of the outer fluid ejection elements e.g. balancing of the inner jets can be achieved as well as e.g. a high degree of penetration, recirculation and mixing of combustion products with the inner jets. Particularly, the burner can be operated with oxidants from air to pure oxygen and with any proportion of air and oxygen to obtain desired combustion characteristics like momentum, penetration and mixing as well as low emissions.

Furthermore, the burner according to the present invention particularly allows reducing and minimising NOx emissions. In combustion processes NOx may be formed by a number of mechanisms, e.g. by prompt, thermal processes, so called thermal NOx, or by chemically bound nitrogen to the fuel molecule, so called fuel NOx. With the combustion of typical clean fuels like methane there is usually no fuel NOx and the majority of NOx usually is formed by thermal NOx process at elevated temperature. NOx emissions thus usually depend on the specific oxidant used for combustion as well as on the way of supplying the specific oxidant. As thermal NOx is driven by the availability of free oxygen and nitrogen at elevated temperatures reducing the temperature and reducing the interaction of oxygen and nitrogen at elevated temperatures can reduce the amount of NOx formed.

Usually, in common burners a staged combustion can be performed such that fuel partially reacts with the oxygen in a fuel rich environment and subsequently burns out with a supplemental oxidant supply. In this way substantial portions of the reaction can occur in a fuel rich (i.e. low oxygen O₂) environment. The flame is thus elongated by the delayed reaction and heat is radiated from the flame prior to the final oxidation, i.e. the peak flame temperatures are suppressed. However, when adding pure oxygen to the combustion process, the tendency to enhance the formation of thermal NOx is increased as the addition of oxygen is known to increase the flame temperature. This increase continues until one reaches fairly high oxygen concentrations at which point the availability of nitrogen decreases sufficiently and reduces the amount of NOx formed. Thus, it is possible for a common air-oxy-fuel burner to produce increased levels of NOx beyond acceptable levels for air-fuel burners and oxy-fuel burners.

The burner according to the present invention, however, allows providing oxidants and fuel such that thermal NOx can be reduced or minimised. Particularly, the inner fluid supply unit allows introducing the fuel and a portion of the oxidant stream at high velocity to produce a high velocity fuel rich central stream. The outer fluid supply unit allows introducing the balance of the oxidant at high velocity for final combustion of the fuel rich central stream. High velocities of the central, inner fuel rich stream and peripheral, outer oxidant jets serve to cause a high degree of penetration e.g. into furnace atmospheres as well as a high degree of recirculation and mixing of hot combustion products into the fuel and oxidant jets. Such mixing serves to dilute the inner, central and the outer, peripheral streams with hot combustion products causing a more diffuse combustion reaction. Such a diffuse reaction expediently reduces local peak temperatures and reduces NOx.

According to a particularly preferred embodiment, the burner is configured for ejecting a first oxidant, a second oxidant and a fuel by means of individual fluid ejection elements of the inner fluid supply unit and the outer fluid supply unit and for controlling at least one ratio between amounts of the ejected first oxidant and/or the ejected second oxidant and/or the ejected fuel such that at least one process parameter is optimised. The corresponding ratio(s) can thus be controlled and varied specifically and individually throughout various sequences of burner operation in order to perform combustion and to operate the burner with optimised process parameters and thus with high efficiency. The burner can be operated individually optimised throughout different sequences of burner operation, like start-up, heat-up, melt-down, superheating, holding, etc. Particularly, the at least one ratio is controlled such that a heat release pattern and/or an NOx emission performance and/or safety of operation and/or a process economy are optimised, particularly in each part of a production cycle and business cycle.

Advantageously, the burner is configured for controlling a first ratio between an amount of the first oxidant and an amount of the second oxidant ejected by means of both the inner fluid supply unit and the outer fluid supply unit. The first ratio therefore refers to a ratio between the total amount of the first oxidant and the total amount of the second oxidant ejected through all of the fluid ejection elements.

Advantageously, the burner is configured for controlling a second ratio between an amount of the first oxidant and/or the second oxidant ejected by means of the inner fluid supply unit and an amount of the first oxidant and/or the second oxidant ejected by means of the outer fluid supply unit. This second ratio especially corresponds to a ratio between the total amount of oxidant(s) ejected through the fluid ejection elements of the inner fluid supply unit and the total amount of oxidant(s) ejected through the fluid ejection elements of the outer fluid supply unit.

Advantageously, the burner is configured for controlling the first ratio and the second ratio such that at least one process parameter is optimised. Therefore, according to a particularly preferred embodiment, the first ratio between the first and the second oxidant as well as the second ratio between the inner total oxidant(s) and the outer total oxidant(s) are continuously controlled and varied so as to obtain, for the receiving combustion process, the heat release pattern, the NOx emission performance, the safety of operation and the process economy that are optimal in each part of the production cycle and business cycle.

For example, if the process is initially cold, the burner can be operated in a safe semi-flameless, moderate NOx mode, e.g. with higher relative flow in the inner fluid supply unit, e.g. with medium oxygen and air use. At higher temperature, the burner can e.g. be operated in a super efficient, high oxygen use, low air use, high power, high heat transfer and low specific off-gas volume mode, for example during the meltdown part of the production cycle. During the final part of the process with low power requirements and limited heat transfer possibility, the burner can e.g. be operated with low oxygen/high air, e.g. with high specific off-gas volume to avoid air ingress into the furnace.

According to a particularly advantageous embodiment, the inner fluid supply unit further comprises a third inner fluid ejection element, particularly a third pipe, encompassing, i.e. circumferentially surrounding at least an axial portion of the second inner fluid ejection element. Expediently, the third inner fluid ejection element encompasses at least an axial portion extending from an axial end of the of the second inner fluid ejection element, at which the corresponding fluid can be ejected. Therefore, the inner fluid supply unit advantageously comprises three inner fluid ejection elements, preferably three pipes. Particularly, these three inner fluid ejection elements are arranged coaxially and further particularly concentrically. The third fluid ejection element is particularly provided for ejecting a third fluid. It is however also possible to eject the first and/or the second fluid by means of the third fluid ejection element. It is expediently possible to provide the fuel as well as two different oxidants by means of the three inner fluid ejection elements.

Expediently, the second and third inner fluid ejection elements are arranged such that a second annular channel is provided or formed around the second inner fluid ejection element, through which the corresponding fluid can be led. Thus, a second annular jet or stream can be created circumferentially encompassing or surrounding the annular stream of the second fluid ejection element. Particularly, the jets or streams of the first, second and third fluid can interact or mix and create a central jet comprising a mixture of three fluids. It is also possible to provide further inner fluid ejection elements, each one encompassing at least an axial portion of the previous element, thus providing further annular channels and further annular jets.

Advantageously, individual outer fluid ejection elements each comprise a central fluid ejection element, particularly a central pipe, and an encompassing fluid ejection element, particularly an encompassing pipe, encompassing i.e. circumferentially surrounding at least an axial portion of the central fluid ejection element. Accordingly to the first and second inner fluid ejection elements, also by means of these central and encompassing fluid ejection elements two different fluids can be provided and an annular fluid stream around a central fluid jet can be created. Particularly, the fuel and an oxidant or two different oxidants can be provided by the central and encompassing fluid ejection elements. Alternatively or additionally, individual outer fluid ejection elements preferably each comprise only one single fluid ejection element, particularly a single pipe.

Advantageously, the outer fluid supply unit comprises at least two outer fluid ejection elements arranged circumferentially around the inner fluid supply unit. Preferably, the at least two outer fluid ejection elements have the same radial distance from the inner fluid supply unit, particularly from the centre of the inner fluid supply unit, particularly from the centre of the first inner fluid ejection element. Expediently, the outer fluid ejection elements are arranged symmetrically around the inner fluid supply unit. Particularly, an even number of outer fluid ejection elements is provided, especially four outer fluid ejection elements. Particularly, these radial distances can each be up to twice the radius of the outermost inner fluid ejection element, especially of the second or third inner fluid ejection element. Particularly, the radial distances can each be at most 50% larger, further especially at most 25% larger than the radius of the outermost inner fluid ejection element.

Advantageously, a diameter of the at least one outer fluid ejection element is smaller than a diameter of the first inner fluid ejection element. The outer fluid ejection elements can especially be provided as lances with small diameter to create rather narrow jets. Particularly, the diameter of the central and the encompassing fluid ejection elements are each smaller than the diameter of the first inner fluid ejection element.

According to a preferred embodiment, the inner fluid supply unit comprises at least one pressure reducing element for reducing the fluid velocity. Preferably, at least one pressure reducing element is attached to an inner wall and/or outer wall of at least one of the fluid ejection elements of the inner fluid supply unit. These pressure reducing elements can preferably be provided as at least one perforated plate. These pressure reducing elements can e.g. be placed at an inlet to the corresponding fluid ejection element in order to be replaceable for different configurations of the burner. By means of these pressure reducing elements the velocity of corresponding fluids can be locally reduced particularly to limit the amount of fluid in the inner fluid supply relative to the amount in the outer fluid supply and to create a stable flame.

Preferably, at least one pressure reducing element is provided for an individual fluid ejection element of the inner fluid supply unit, wherein a fluid, which is to be ejected by means of this individual fluid ejection element, is further to be ejected by means of at least one outer fluid ejection element of the outer fluid supply unit. Particularly, pressure reducing elements are used for fluids flowing through the inner supply unit, when these same fluids are also flowing through the outer supply unit, particularly when the corresponding fluid ejection elements of the inner supply unit and the outer supply unit are connected to the same fluid supply. Particularly, the corresponding individual fluid injection elements of the inner fluid supply unit are provided with pressure reducing elements when using the same supply pressure to both the corresponding individual fluid injection elements and the corresponding outer fluid ejection elements in order to reduce the amount of fluid that flows to the inner fluid supply unit while achieving a lower injection velocity compared to the outer fluid supply unit. Particularly, the velocity of the fluid at the outlet of the pipe, in which the pressure reducing element is placed, can be reduced. Thus, a pressure drop is introduced and the amount of gas flowing in that part of the system can be reduced. Reducing the amount of gas at a given upstream pressure will reduce the outlet velocity. This makes it particularly possible to supply a fluid to have sonic or supersonic velocity in some ejection elements and much lower velocity in another ejection element.

The present invention further relates to a method for controlling a corresponding burner. Advantages and embodiments of this method and the burner according to the invention arise from the description in an analogous manner.

The present method comprises the steps of ejecting the first oxidant, the second oxidant and the fuel by means of individual fluid ejection elements of the inner fluid supply unit and the outer fluid supply unit, and controlling at least one ratio between amounts of the ejected first oxidant and/or the ejected second oxidant and/or the ejected fuel such that at least one process parameter is optimised.

According to a particularly advantageous embodiment, the burner comprising the first inner fluid ejection element, the second inner fluid ejection element and the third inner fluid ejection element is operated comprising the steps of ejecting the first oxidant, particularly oxygen, by means of the first inner fluid ejection element, ejecting the fuel, particularly methane or natural gas, by means of the second inner fluid ejection element, and ejecting the second oxidant, particularly air, by means of the third inner fluid ejection element. Thus, a central high velocity oxygen jet, an annular high velocity gaseous fuel jet around the oxygen jet and a second annular high velocity air jet around the gaseous fuel jet can be created. For example, the inner fluid supply unit can be controlled such that the oxygen speed is larger than the fuel speed at full oxygen operation and that the fuel speed is larger than the air speed at full air operation.

Preferably, the method further comprises the step of ejecting the first oxidant, particularly oxygen, and/or the second oxidant, particularly air, by means of the at least one outer fluid ejection element. Thus, according to this particular embodiment, the inner fluid supply unit expediently introduces the gaseous fuel and a portion of the oxidant stream at medium velocity to produce a high velocity fuel rich central stream and the outer fluid supply unit expediently introduces the balance of the oxidant at high velocity for final combustion of the fuel rich central stream. Expediently, a portion of the total air and total oxygen can be delivered to the inner supply unit, e.g. 20%, with the balance delivered to the outer supply unit. For this purpose, the outer fluid ejection elements can for example be provided as individual oxygen injectors and individual air injectors or as oxygen-air combination injectors.

Particularly, pressure reducing elements are used for gases flowing through the inner supply unit, when these same gases are also flowing through the outer supply unit, particularly when the corresponding fluid ejection elements of the inner supply unit and the outer supply unit are connected to the same fluid supply. When e.g. oxygen is supplied by means of the first inner fluid ejection element, when air is supplied by means of the third inner fluid ejection element, and when air and oxygen are further supplied by means of the outer fluid ejection elements, then pressure reducing elements are particularly attached to the inner wall of the first inner fluid ejection element and to the inner wall of the third inner fluid ejection element.

Advantageously, at least one of the outer fluid ejection elements comprises a central fluid ejection element and an encompassing fluid ejection element. In this case, the method further comprises the steps of ejecting the first oxidant, particularly oxygen, by means of the central fluid ejection element and ejecting the second oxidant, particularly air, by means of the encompassing fluid ejection element. These outer fluid ejection elements particularly create a high velocity, especially sonic or supersonic oxygen jet surrounded by a high velocity annular air stream. The air velocity of the outer ejection element can expediently be identical or at least substantially identical to the air velocity of the third inner fluid ejection element. For this purpose, the outer fluid ejection elements and the third inner fluid ejection element can for example be fed from the same supply blower and control valve.

According to a particularly advantageous embodiment, the burner is operated by ejecting a fuel, particularly methane or natural gas, by means of the first inner fluid ejection element. Further, a first oxidant, particularly air, is ejected by means of the second inner fluid ejection element. Alternatively or additionally, the fuel and/or a second oxidant, particularly oxygen, is ejected by means of the at least one outer fluid ejection element. In this particular embodiment, the burner can e.g. be used as a plain air-fuel burner when the outer fluid supply unit is deactivated and only the inner fluid supply unit is used. When the second inner fluid ejection element is deactivated, the outer fluid supply unit particularly can be used as oxygen lances and the burner can be operated as a plain oxy-fuel burner, particularly as a low temperature oxy-fuel burner (LTOF), particularly for flameless combustion. For example, the air-fuel operation can be used during ignition for the LTOF operation. The air-fuel operation can e.g. also be combined with the LTOF operation to boost certain process steps. When activating the inner and the outer fluid supply unit, the burner can thus also be operated as an air-oxy-fuel burner.

Preferably, a first number, especially a first half of the outer fluid ejection elements, each comprise a central fluid ejection element and an encompassing fluid ejection element. A second number, especially a second half of the outer fluid ejection elements, preferably each comprise one single fluid ejection element. The burner is in this case advantageously operated comprising the steps of ejecting the fuel by means of the central fluid ejection elements and ejecting the second oxidant, particularly oxygen, by means of the encompassing fluid ejection elements and by means of the single fluid ejection elements. Outer fluid ejection elements with central and encompassing elements and with single elements can be arranged alternatingly in a circumferential direction around the inner fluid supply unit.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which
- Figure 1: schematically shows a preferred embodiment of a burner according to the present invention in a front view and in a sectional side view, and
- Figure 2: schematically shows a preferred embodiment of a burner according to the present invention in a front view and sectional side views.

### Detailed description

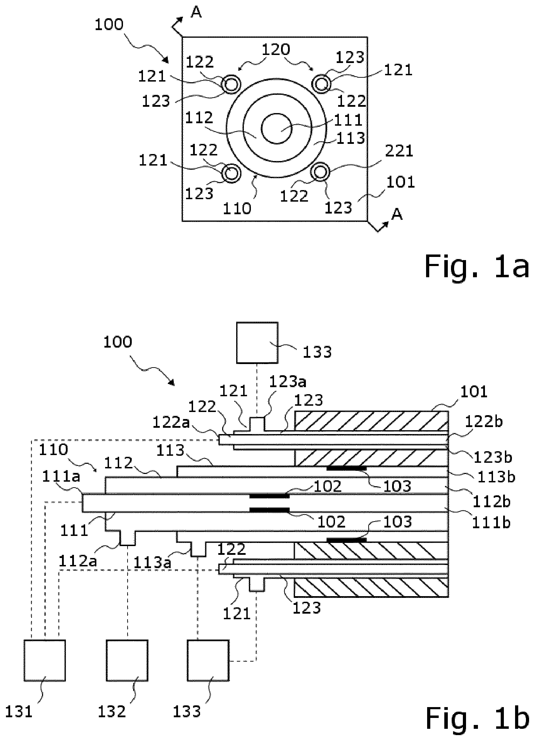

Figure 1 schematically shows a preferred embodiment of a burner according to the present invention. Figure 1a shows the burner 100 in a schematic front view. Figure 1b shows the burner 100 in a sectional side view along the line A-A of Figure 1a.

The burner 100 comprises an inner fluid supply unit 110 and an outer fluid supply unit 120 arranged in a common housing 101.

The inner fluid supply unit 110 comprises a first inner fluid ejection element 111, particularly a first pipe, a second inner fluid ejection element 112, particularly a second pipe, and a third inner fluid ejection element 113, particularly a third pipe. The first, second and third inner fluid ejection elements 111, 112, 113 are arranged coaxially and concentrically.

The second inner fluid ejection element 112 encompasses, i.e. circumferentially surrounds an axial portion of the first inner fluid ejection element 111 and the third inner fluid ejection element 113 encompasses, i.e. circumferentially surrounds an axial portion of the second inner fluid ejection element 112. Thus, by means of the second inner fluid ejection element 112 a first annular channel is provided around the first inner fluid ejection element 111. Accordingly, by means of the third inner fluid ejection element 113 a second annular channel is provided around the second inner fluid ejection element 112.

A port 111a of the first inner fluid ejection element 111 can be connected with a first fluid supply 131, e.g. comprising a fluid storing vessel and a pump, such that a first fluid can be led from the first fluid supply 131 through the first fluid ejection element 111 and can be ejected throughout an axial end 111b of the first fluid ejection element 111.

Accordingly, a port 112a of the second inner fluid ejection element 112 can be connected with a second fluid supply 132 such that a second fluid can be ejected throughout an axial end 112b of the second fluid ejection element 112.

Further, a port 113a of the third inner fluid ejection element 113 can be connected with a third fluid supply 133 such that a third fluid can be ejected throughout an axial end 113b of the third fluid ejection element 113.

The first inner fluid ejection element 111 comprises a first pressure reducing element 102 in the form of a perforated plate arranged at an inner wall of the first inner fluid ejection element 111. By means of this first pressure reducing element 102 a velocity of the first fluid flowing through the first inner fluid ejection element 111 can be reduced. A second pressure reducing element 103 in the form of a perforated plate is arranged at an inner wall of the third inner fluid ejection element 113 for reducing a velocity of the third fluid flowing through the third inner fluid ejection element 113.

The outer fluid supply unit 120 comprises a multitude of outer fluid ejection elements 121. These outer fluid ejection elements 121 are each arranged at a specific radial distance from the inner fluid supply unit 110, particularly from a centre of the inner fluid supply unit 110, particularly from a centre of the first inner fluid ejection element 111. These radial distances of the outer fluid ejection elements 121 are particularly to be understood as the radial distance between the centre of the corresponding outer fluid ejection element 121 and the centre of the first inner fluid ejection element 111 at the axial end 111b of the first fluid ejection element 111. For example, these radial distances can each be in the range between the radius of the third inner fluid ejection element 113 and 1.5 times the radius of the third inner fluid ejection element 113.

In particular, four outer fluid ejection elements 121 are arranged circumferentially around the inner fluid supply unit 110, especially symmetrically and in equidistant circumferential distances to each other. Particularly, each outer fluid ejection element 121 has the same radial distance to the centre of the first inner fluid ejection element 111.

Further, the longitudinal axis of each outer fluid ejection element 121 is at least essentially parallel to the longitudinal axes of the first, second and third inner fluid ejection elements 111, 112, 113. Further, the outer fluid ejection elements 121 are arranged at a side of a wall of the second inner fluid ejection element 112 and of a wall of the third inner fluid ejection element 113 facing away from a wall of the first inner fluid ejection element 111.

In this preferred embodiment, each outer fluid ejection element 121 comprise a central fluid ejection element 122, particularly a central pipe, and an encompassing fluid ejection element 123, particularly an encompassing pipe, encompassing an axial portion of the central fluid ejection element 122. It is, however, also possible, that some or all of the outer fluid ejection elements 121 each comprise only one single fluid ejection element, particularly one single pipe.

A port 122a of each central fluid ejection element 122 can be connected with the first, the second or the third fluid supply 131, 132, 133 such that the corresponding fluid can be ejected throughout an axial end 122b of the central fluid ejection element 122. In the present example, the ports 122a are connected with the first fluid supply 131.

Accordingly, a port 123a of each encompassing fluid ejection element 123 can be connected with the first, the second or the third fluid supply 131, 132, 133 in order to eject the corresponding fluid throughout an axial end 123b of the encompassing fluid ejection element 123. In the present example, the ports 123a are connected with the third fluid supply 133.

According to a particularly advantageous embodiment, the first fluid supply 131 is an oxygen supply, the second fluid supply 132 is fuel supply, e.g. for natural gas, and the third fluid supply 133 is an air supply.

Thus, by means of the first, second and third inner fluid ejection elements 111, 112, 113, a central high velocity oxygen jet, an annular high velocity gaseous fuel jet around the oxygen jet and a second annular high velocity air jet around the gaseous fuel jet can be created. For example, the oxygen speed can be larger than the fuel speed at full oxygen operation and the fuel speed can be larger than the air speed at full air operation. Further, by each of the outer fluid ejection elements 121, a high velocity, especially a sonic or supersonic oxygen jet surrounded by a high velocity annular air stream is created. Expediently, a portion of the total air and total oxygen can be delivered to the inner supply unit 110, e.g. 20%, with the balance delivered to the outer supply unit 120.

Since the first inner fluid ejection element 111 and the central fluid ejection elements 122 are connected to the same fluid supply 131 and are therefore provided for ejecting the same fluid, i.e. oxygen, the first inner fluid ejection element 111 is provided with the pressure reducing elements 102. Thus, the same supply pressure is used for the first inner fluid ejection element 111 and the central fluid ejection elements 122. By means of the pressure reducing elements 102 the amount of oxygen that flows to the inner fluid supply unit 110 can be reduced while achieving a lower injection velocity compared to the outer fluid supply unit 120.

Accordingly, the third inner fluid ejection element 113 is provided with the pressure reducing elements 103, since the third inner fluid ejection element 113 and the encompassing fluid ejection elements 123 are connected to the same fluid supply 133 and are provided for ejecting the same fluid, e.g. air. The same supply pressure is therefore used for the third inner fluid ejection element 113 and the encompassing fluid ejection elements 123. By means of the pressure reducing elements 103 the amount of air flowing to the inner fluid supply unit 110 can be reduced while achieving a lower injection velocity compared to the outer fluid supply unit 120.

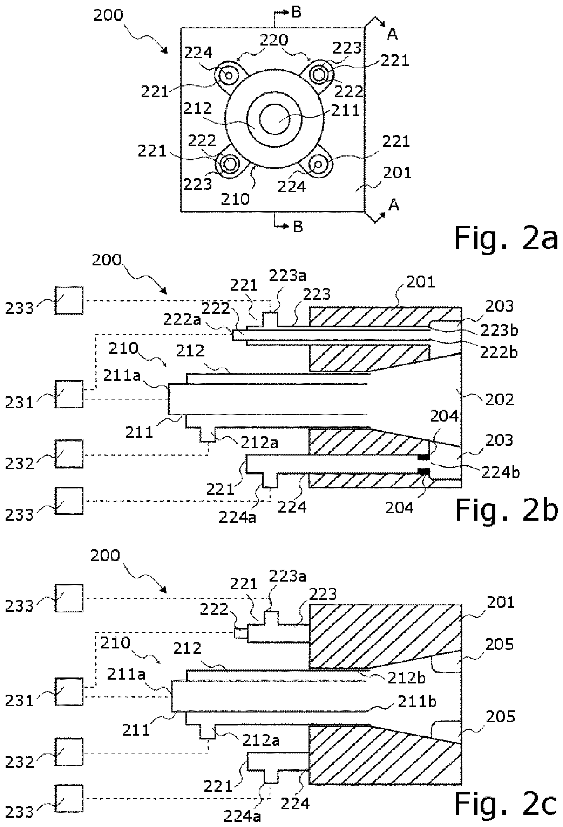

Figure 2 schematically shows a preferred embodiment of a burner according to the present invention, wherein Figure 2a shows the burner 200 in a schematic front view, Figure 2b shows the burner 200 in a sectional side view along the line A-A of Figure 2a, and Figure 2c shows the burner 200 in a sectional side view along the line B-B of Figure 2a.

The burner 200 comprises an inner fluid supply unit 210 and an outer fluid supply unit 220 arranged in a common housing 201.

The inner fluid supply unit 210 comprises a first inner fluid ejection element 211, particularly a first pipe, and a second inner fluid ejection element 212, particularly a second pipe. The first and second inner fluid ejection elements 211, 212 are arranged coaxially and concentrically.

The second inner fluid ejection element 212 encompasses, i.e. circumferentially surrounds an axial portion of the first inner fluid ejection element 211. Thus, by means of the second inner fluid ejection element 212 an annular channel is provided around the first inner fluid ejection element 211.

A port 211a of the first inner fluid ejection element 211 can be connected with a first fluid supply 231, e.g. comprising a fluid storing vessel and a pump, such that a first fluid can be led from the first fluid supply 231 through the first fluid ejection element 211 and can be ejected throughout an axial end 211b of the first fluid ejection element 211.

Accordingly, a port 212a of the second inner fluid ejection element 212 can be connected with a second fluid supply 232 such that a second fluid can be ejected throughout an axial end 212b of the second fluid ejection element 212.

In the housing 201 there is an opening 202 extending from the axial ends 211b, 212b of the first and second inner fluid ejection elements 211, 212. This opening 202 e.g. has the shape of a conical frustum. In this opening 202, dynamic elements 205 can be provided for influencing the dynamics of the fluids ejected from the axial ends 211b, 212b.

The outer fluid supply unit 220 comprises a multitude of outer fluid ejection elements 221. These outer fluid ejection elements 221 are arranged at a side of a wall of the second inner fluid ejection element 212 facing away from a wall of the first inner fluid ejection element 211. The outer fluid ejection elements 221 are each arranged at a specific radial distance from the inner fluid supply unit 210, particularly from a centre of the inner fluid supply unit 210, particularly from a centre of the first inner fluid ejection element 211. These radial distances of the outer fluid ejection elements 221 are particularly to be understood as the radial distance between the centre of the corresponding outer fluid ejection element 221 and the centre of the first inner fluid ejection element 211 at the axial end 211b of the first fluid ejection element 211. These radial distances can each particularly be in the range between the radius of the second inner fluid ejection element 212 and 1.5 times the radius of the second inner fluid ejection element 212.

In particular, four outer fluid ejection elements 221 are arranged circumferentially around the inner fluid supply unit 210, especially symmetrically and in equidistant circumferential distances to each other. Particularly, each outer fluid ejection element 221 has the same radial distance to the centre of the first inner fluid ejection element 211. Further, the longitudinal axis of each outer fluid ejection element 221 is at least essentially parallel to the longitudinal axes of the first and second inner fluid ejection elements 211, 212.

In this preferred embodiment, a first half of the outer fluid ejection elements 221 each comprise a central fluid ejection element 222, particularly a central pipe, and an encompassing fluid ejection element 223, particularly an encompassing pipe, encompassing an axial portion of the central fluid ejection element 222. A second half of the outer fluid ejection elements 221 each comprise only one single fluid ejection element 224, particularly one single pipe.

Outer fluid ejection elements 221 with central and encompassing elements 222, 223 and with single elements 224 are arranged alternatingly in a circumferential direction around the inner supply unit 210.

A port 222a of each central fluid ejection element 222 can be connected with the first, the second or a third fluid supply 231, 232, 233 such that the corresponding fluid can be ejected throughout an axial end 222b of the central fluid ejection element 222. In the present example, the ports 222a are connected with the third fluid supply 233.

Accordingly, a port 223a of each encompassing fluid ejection element 223 can be connected with the first, the second or the third fluid supply 231, 232, 233 in order to eject the corresponding fluid throughout an axial end 223b of the encompassing fluid ejection element 223. In the present example, the ports 223a are connected with the third fluid supply 133.

Further, a port 223a of each single fluid ejection element 224 can be connected with the first, the second or the third fluid supply 231, 232, 233 to eject the corresponding fluid throughout an axial end 224b of the single fluid ejection element 224. In the present example, also the ports 224a are connected with the third fluid supply 133.

In the housing 201 there is an opening 203 extending from the axial ends 222b, 223b, 224b of the central, encompassing and single fluid ejection elements 222, 223, 224. Further, at the axial ends 224b of the single fluid ejection elements 224, dynamic elements 204 can be provided for influencing the dynamics of the ejected fluid.

According to a particularly advantageous embodiment, the first fluid supply 231 is a fuel supply, e.g. for natural gas, the second fluid supply 232 is an air supply, and the third fluid supply 233 is an oxygen supply.

Thus, by means of the first and second inner fluid ejection elements 211, 212, a central high velocity fuel jet and an annular high velocity air jet around the fuel jet can be created. By means of the central and encompassing fluid ejection elements 222, 223, a central high velocity fuel jet and an annular high velocity oxygen jet can be created. By means of the single fluid ejection elements 224, a high velocity oxygen jet can be created.

It is particularly possible to activate or deactivate individual fluid ejection elements of the inner and outer fluid supply unit 210, 220 in order to operate the burner 200 in different operation modes. Thus, the burner 200 can flexibly be operated as an air-fuel burner or as an oxy-fuel burner or as an air-oxy-fuel burner.

When activating both the inner and the outer fluid supply unit 210, 220, the burner 200 can be operated as an air-oxy-fuel burner. When the outer fluid supply unit 220 is deactivated and when the inner fluid supply unit 210 is activated, the burner 200 can be used as a plain air-fuel burner. When the first inner fluid ejection element 211 is activated, when the second inner fluid ejection element 212 is deactivated and when the central and encompassing fluid ejection elements 222, 223 are deactivated, the single fluid ejection elements 224 can be used as oxygen lances and the burner 200 can be operated as a plain oxy-fuel burner, particularly as a low temperature oxy-fuel burner (LTOF), particularly for flameless combustion. For example, the air-fuel operation can be used during ignition for the LTOF operation. The air-fuel operation can e.g. also be combined with the LTOF operation to boost certain process steps.

### Reference list

- 100: burner
- 101: housing
- 102: pressure reducing element, perforated plate
- 103: pressure reducing element, perforated plate

- 110: inner fluid supply unit
- 111: first inner fluid ejection element
- 111a: port of the first fluid ejection element
- 111b: axial end of the first fluid ejection element
- 112: second inner fluid ejection element
- 112a: port of the second fluid ejection element
- 112b: axial end of the second fluid ejection element
- 113: third inner fluid ejection element
- 113a: port of the third fluid ejection element
- 113b: axial end of the third fluid ejection element

- 120: outer fluid supply unit
- 121: outer fluid ejection element
- 122: central fluid ejection element
- 122a: port of the central fluid ejection element
- 122b: axial end of the central fluid ejection element
- 123: encompassing fluid ejection element
- 123a: port of the encompassing fluid ejection element
- 123b: axial end of the encompassing fluid ejection element

- 131: first fluid supply, oxygen supply
- 132: second fluid supply, fuel supply
- 133: third fluid supply, air supply

- 200: burner
- 201: housing
- 202: opening
- 203: opening
- 204: dynamic element
- 205: dynamic element

- 210: inner fluid supply unit
- 211: first inner fluid ejection element
- 211a: port of the first fluid ejection element
- 211b: axial end of the first fluid ejection element
- 212: second inner fluid ejection element
- 212a: port of the second fluid ejection element
- 212b: axial end of the second fluid ejection element

- 220: outer fluid supply unit
- 221: outer fluid ejection element
- 222: central fluid ejection element
- 222a: port of the central fluid ejection element
- 222b: axial end of the central fluid ejection element
- 223: encompassing fluid ejection element
- 223a: port of the encompassing fluid ejection element
- 223b: axial end of the encompassing fluid ejection element
- 224: single fluid ejection element
- 224a: port of the single fluid ejection element
- 224b: axial end of the single fluid ejection element

- 231: first fluid supply, fuel supply
- 232: second fluid supply, air supply
- 233: third fluid supply, oxygen supply

## Claims

1. A burner (100, 200) for combustion of fluids comprising an inner fluid supply unit (110, 210) and an outer fluid supply unit (120, 220),
wherein the inner fluid supply unit (110, 210) comprises a first inner fluid ejection element (111, 211), particularly a first pipe, and a second inner fluid ejection element (112, 212), particularly a second pipe, encompassing at least an axial portion of the first inner fluid ejection element (111, 211), and
wherein the outer fluid supply unit (120, 220) comprises at least one outer fluid ejection element (121, 221), particularly at least one pipe, wherein the at least one outer fluid ejection element (121, 221) is arranged at a specific radial distance from the inner fluid supply unit (110, 210), particularly from a centre of the inner fluid supply unit (110, 210), particularly from a centre of the first inner fluid ejection element (111, 211).

2. The burner according to claim 1 configured for
ejecting a first oxidant, a second oxidant and a fuel by means of individual fluid ejection elements of the inner fluid supply unit (110, 210) and the outer fluid supply unit (120, 220); and
controlling at least one ratio between amounts of the ejected first oxidant and/or the ejected second oxidant and/or the ejected fuel such that at least one process parameter is optimised.

3. The burner according to claim 2 configured for
controlling a first ratio between an amount of the first oxidant and an amount of the second oxidant ejected by means of both the inner fluid supply unit (110, 210) and the outer fluid supply unit (120, 220);
controlling a second ratio between an amount of the first oxidant and/or the second oxidant ejected by means of the inner fluid supply unit (110, 210) and an amount of the first oxidant and/or the second oxidant ejected by means of the outer fluid supply unit (120, 220); and
controlling the first ratio and the second ratio such that the at least one process parameter is optimised.

4. The burner according to any one of the preceding claims, wherein the inner fluid supply unit (110) further comprises a third inner fluid ejection element (113), particularly a third pipe, encompassing at least an axial portion of the second inner fluid ejection element (112).

5. The burner according to any one of the preceding claims, wherein individual outer fluid ejection elements (121, 221) each comprise a central fluid ejection element (122, 222), particularly a central pipe, and an encompassing fluid ejection element (123, 223), particularly an encompassing pipe, encompassing at least an axial portion of the central fluid ejection element (122, 222), and/or wherein individual outer fluid ejection elements (121, 221) each comprise only one single fluid ejection element (224), particularly a single pipe.

6. The burner according to any one of the preceding claims, wherein the outer fluid supply unit (120, 220) comprises at least two outer fluid ejection elements (121, 221) arranged circumferentially around the inner fluid supply unit (110, 210), particularly such that the at least two outer fluid ejection elements (121, 221) have the same radial distance from the inner fluid supply unit (110, 210), particularly from the centre of the inner fluid supply unit (110, 210).

7. The burner according to any one of the preceding claims, wherein at least one pressure reducing element (102, 103) is attached to an inner wall and/or outer wall of at least one of the fluid ejection elements of the inner fluid supply unit (110, 210).

8. The burner according to claim 7, wherein at least one pressure reducing element (102, 103) is provided for an individual fluid ejection element (111, 113) of the inner fluid supply unit (110), wherein a fluid, which is to be ejected by means of this individual fluid ejection element (111, 113), is further to be ejected by means of at least one outer fluid ejection element (121, 122) of the outer fluid supply unit (120).

9. A method for operating a burner (100, 200) according to any one of the preceding claims, comprising the steps of:
ejecting a first oxidant, a second oxidant and a fuel by means of individual fluid ejection elements of the inner fluid supply unit (110, 210) and the outer fluid supply unit (120, 220); and
controlling at least one ratio between amounts of the ejected first oxidant and/or the ejected second oxidant and/or the ejected fuel such that at least one process parameter is optimised.

10. The method according to claim 9, comprising the steps of:
controlling a first ratio between an amount of the first oxidant and the second oxidant ejected by means of both the inner fluid supply unit (110, 210) and the outer fluid supply unit (120, 220);
controlling a second ratio between an amount of the first oxidant and/or the second oxidant ejected by means of the inner fluid supply unit (110, 210) and an amount of the first oxidant and/or the second oxidant ejected by means of the outer fluid supply unit (120, 220); and
controlling the first ratio and the second ratio such that the at least one process parameter is optimised.

11. The method according to claim 9 or 10 when dependent on claim 4 for operating a burner (100) with the first inner fluid ejection element (111), the second inner fluid ejection element (112) and the third inner fluid ejection element (113), comprising the steps of:
ejecting the first oxidant, particularly oxygen, by means of the first inner fluid ejection element (111);
ejecting the fuel, particularly methane or natural gas, by means of the second inner fluid ejection element (112); and
ejecting the second oxidant, particularly air, by means of the third inner fluid ejection element (113).

12. The method according to claim 11, further comprising the step of:
ejecting the first oxidant and/or the second oxidant by means of the at least one outer fluid ejection element (121).

13. The method according to claim 11 or 12 when dependent on claim 6, wherein at least one of the outer fluid ejection elements (121) comprises a central fluid ejection element (122) and an encompassing fluid ejection element (123), further comprising the steps of:
ejecting the first oxidant, particularly oxygen, by means of the central fluid ejection element (122) and
ejecting the second oxidant, particularly air, by means of the encompassing fluid ejection element (123).

14. The method according to claim 9 or 10, comprising the steps of:
ejecting the fuel, particularly methane or natural gas, by means of the first inner fluid ejection element (211);
ejecting the first oxidant, particularly air, by means of the second inner fluid ejection element (212); and/or
ejecting the fuel and/or the second oxidant, particularly oxygen, by means of the at least one outer fluid ejection element (221).

15. The method according to claim 14 when dependent upon claim 5, wherein a first number of the outer fluid ejection elements (221) each comprise a central fluid ejection element (222) and an encompassing fluid ejection element (223) and wherein a second number of the outer fluid ejection elements (221) each comprise one single fluid ejection element (224), the method further comprising the steps of:
ejecting the fuel by means of the central fluid ejection elements (222),
ejecting the second oxidant, particularly oxygen, by means of the encompassing fluid ejection elements (223) and by means of the single fluid ejection elements (224).
